# EUROPÄISCHE PATENTSCHRIFT

(11) **EP 3 035 430 B1**
(45) Veröffentlichungstag und Bekanntmachung des Hinweises auf die Patenterteilung: **25.09.2019**
(21) Anmeldenummer: 15190345.7
(22) Anmeldetag: 19.10.2015
(51) Int. Cl.: H01M 8/2425, H01M 8/2475, H01M 8/0206, H01M 8/04082, H01M 8/2465, H01M 8/0612, H01M 8/124

(54) **BRENNSTOFFZELLENMODUL**
FUEL CELL MODULE
MODULE DE PILES A COMBUSTIBLE

(30) Priorität: 19.12.2014 EP 14199229
(43) Veröffentlichungstag der Anmeldung: 22.06.2016
(73) Patentinhaber: Hexis AG, 8404 Winterthur (CH)
(72) Erfinder: Denzler, Roland, 8484 Weisslingen (CH); Mai, Andreas, Dr., 78462 Konstanz (DE); Brogle, Fabian, 78337 Öhningen (DE)
(74) Vertreter: Intellectual Property Services GmbH

(56) Entgegenhaltungen:
- EP-A1- 1 037 296
- US-A- 5 998 053
- US-A1- 2001 046 619
- US-A1- 2011 262 819
- US-A1- 2013 136 953

## Beschreibung

Die Erfindung betrifft ein Brennstoffzellenmodul gemäss dem Oberbegriff des Anspruchs 1.

Brennstoffzellen ermöglichen eine Nutzung von Energie eines Brennstoffs durch Energieumwandlung. Dabei können sowohl elektrische Energie, die aufgrund elektrochemischer Prozesse erzeugt wird, als auch thermische Energie, die in Form von heissen Abgasen der Prozesse anfällt, genutzt werden. Es werden dazu gasförmige Ströme zweier Edukte getrennt durch die Zellen geführt. Das erste Edukt in Form von Umgebungsluft oder kurz Luft, enthält oxidierende Komponenten, das zweite Edukt reduzierende Komponenten. Als zweites Edukt wird insbesondere ein Methan enthaltendes Verbrennungsgas (z. B. Erdgas) verwendet, das vordem Eintritt in die Zellen durch einen Reformer geführt und dort in die reduzierenden Komponenten Wasserstoff und Kohlenmonoxid und damit in das so genannte Prozessgas umgewandelt wird. Im Folgenden wird das zweite Edukt als Verbrennungsgas oder Erdgas bezeichnet, worunter auch andere geeignete Gase mit reduzierenden Komponenten verstanden werden sollen.

Ein Brennstoffzellenmodul weist meist mehrere Brennstoffzellen auf, die in einem so genannten Zellenstapel angeordnet sind. Die einzelnen Brennstoffzellen sind dann in einer Axialrichtung gestapelt und werden gemeinsam über ein Gaszuführsystem mit Verbrennungsgas in Form von Erdgas versorgt. An einem ersten axialen Ende des Zellenstapels ist ein erster Stromsammler und an einem zweiten axialen Ende des Zellenstapels ein zweiter Stromsammler angeordnet. Über die beiden Stromsammler kann die von den Brennstoffzellen erzeugte elektrische Energie abgegriffen und abgeleitet werden. Ein derartiges Brennstoffzellenmodul ist beispielsweise in der EP 1 864 347 B1 beschrieben.

Die US 2001/046619 A1 beschreibt ebenfalls ein derartiges Brennstoffzellenmodul, bei dem zusätzlich an einem Gaszuführsystem ein Stromanschluss angeordnet ist, der mit dem zweiten Stromsammler elektrisch leitend verbunden ist.

Aus dem Stand der Technik sind verschiedenste Brennstoffzellenvorrichtungen bekannt. Die EP 1 037 296 A1 beschreibt ein Brennstoffzellenmodul mit einem Gaszuführsystem, welches teilweise innerhalb und teilweise ausserhalb einer Hülle einer Brennstoffzellenvorrichtung angeordnet ist. Die US 2013/136953 A1 umfasst eine Brennstoffzellenvorrichtung mit einem leitfähigen Gaszuführsystem, welches ausserhalb einer Hülle der Vorrichtung angeordnet ist. Ausserdem ist aus der US 5 998 053 A eine Brennstoffzellenvorrichtung mit einem Gaszuführsystem bekannt.

Es ist insbesondere die Aufgabe der Erfindung, ein Brennstoffzellenmodul vorzuschlagen, welches einen einfachen Aufbau ermöglicht. Erfindungsgemäß wird diese Aufgabe mit einem Brennstoffzellenmodul mit den Merkmalen des Anspruchs 1 gelöst.

Das Brennstoffzellenmodul verfügt über in einem Zellenstapel angeordnete Brennstoffzellen und ein Gaszuführsystem zur Zuführung von Gas zum Betrieb der Brennstoffzellen. Das Gas kann dabei entweder als das Verbrennungsgas, also insbesondere als Erdgas, oder als die oxidierende Komponente, also insbesondere Luft, ausgeführt sein. Im Folgenden wird davon ausgegangen, dass über das genannte Gaszuführsystem das Verbrennungsgas zugeführt. Die Brennstoffzellen sind in einer Axialrichtung gestapelt. An einem ersten axialen Ende des Zellenstapels ist ein erster Stromsammler und an einem zweiten axialen Ende des Zellenstapels ist ein zweiter Stromsammler angeordnet. Über die beiden Stromsammler kann die von den Brennstoffzellen erzeugte elektrische Energie abgegriffen und abgeleitet werden. Das erste und zweite axiale Ende des Zellstapels sind dabei in Axialrichtung gegenüber liegend angeordnet.

Am Gaszuführsystem ist ein Stromanschluss angeordnet, der mit dem zweiten Stromsammler elektrisch leitend verbunden ist. Über den Stromanschluss kann damit eine elektrische Verbindung zum zweiten Stromsammler hergestellt werden. Es ist für die Ableitung der erzeugten elektrischen Energie damit keine separat zu verlegende elektrische Leitung zum zweiten Stromsammler notwendig, was den Aufbau des Brennstoffzellenmoduls besonders einfach macht. Da beim Betrieb des Brennstoffzellenmoduls in den Brennstoffzellen üblicherweise hohe Temperaturen von mehreren hundert Grad herrschen, ist meist eine Isolation der Brennstoffzellen notwendig. Für eine effektive Isolation und auch für deren einfaches Anbringen ist es vorteilhaft, wenn die Isolation möglichst wenige Öffnungen aufweist. Für das Gaszuführsystem ist auf jeden Fall eine Öffnung notwendig, da das Verbrennungsgas dem Brennstoffzellenmodul von aussen zugeführt werden muss. Da erfindungsgemäss der Stromanschluss für den zweiten Stromsammler am Gaszuführsystem angeordnet ist, ist für die elektrische Verbindung zum zweiten Stromsammler keine zusätzliche Öffnung in der Isolation notwendig.

Erfindungsgemäss sind der Zellenstapel innerhalb und eine Gaszuführleitung des Gaszuführsystems teilweise ausserhalb und teilweise innerhalb einer Isolationshülle angeordnet. Der am Gaszuführsystem angeordnete Stromanschluss ist ausserhalb der Isolationshülle angeordnet. Das Gaszuführsystem führt damit durch die Isolationshülle hindurch. Vor der Inbetriebnahme des Brennstoffzellenmoduls muss der Stromanschluss des Brennstoffzellenmoduls geeignet elektrisch angeschlossen werden. Dies ist sehr einfach und damit kostengünstig möglich, wenn der Stromanschluss entsprechend der Ausgestaltung der Erfindung ausserhalb der Isolationshülle angeordnet ist.

Die Brennstoffzellen sind insbesondere als Hochtemperatur-Brennstoffzellen des SOFC-Typs ("Solid Oxid Fuel Cell") ausgeführt. Als Luft wird insbesondere Umgebungsluft verwendet, die auch vor der Zuführung zum Zellenstapel gefiltert werden kann. Im Betriebszustand des Brennstoffzellenmoduls ist die Axialrichtung üblicherweise senkrecht zum Erdboden ausgerichtet. Wenn im Folgenden von "oben" und "unten" die Rede ist, so bezieht sich das auf die beschriebene Ausrichtung des Brennstoffzellenmoduls im Betriebszustand.

Das Gaszuführsystem ist zumindest teilweise aus einem elektrisch leitenden Material ausgeführt. Die elektrisch leitende Verbindung wird dann über das Gaszuführsystem hergestellt. Damit ist keine separate elektrische Leitung beispielsweise in Form eines Kabels zum zweiten Stromsammler notwendig. Das ermöglicht einen besonders einfachen und kostengünstigen Aufbau des Brennstoffzellenmoduls. Ausserdem entfällt die Gefahr, dass bei der Montage das genannte Kabel nicht richtig angeschlossen wird oder es im Betrieb versagt. Damit wird ein zuverlässiger Betrieb des Brennstoffzellenmoduls ermöglicht. Das Gaszufuhrsystem kann auch vollständig oder bis auf Ausnahme von Teilen des Stromanschlusses aus einem elektrisch leitenden Material ausgeführt sein. Das elektrisch leitende Material kann beispielsweise Stahl sein.

Da das Gaszuführsystem teilweise innerhalb und teilweise ausserhalb der Isolationshülle angeordnet ist, bildet es quasi eine Wärmebrücke durch die Isolation hindurch. Durch die Durchströmung des auch als elektrischer Leiter dienenden Gaszuführsystems durch das Gas von ausserhalb der Isolation nach innerhalb der Isolation ergibt sich eine Kühlung des Gaszuführsystems. Die abgeleitete Wärme wird quasi wieder zurückgeführt. Je massiver das Gaszuführsystem ausgeführt ist, umso mehr wirkt es als Wärmebrücke, auf der anderen Seite führt eine massive Ausführung zu einem geringen elektrischen Widerstand und damit zu geringen elektrischen Verlusten. Durch den beschriebenen Kühleffekt kann das Gaszuführsystem so ausgeführt werden, dass sich ein möglichst geringer elektrischer Widerstand ergibt.

Das Gaszuführsystem umfasst die Gaszuführleitung und einen an der Gaszuführleitung angeordneten Gasanschluss. Die Gaszuführleitung ist teilweise ausserhalb der Isolationshülle angeordnet. Die Gaszuführleitung ist damit auch zum Teil innerhalb der Isolationshülle angeordnet und führt durch diese hindurch. Der Stromanschluss ist in diesem Fall vorzugsweise am ausserhalb der Isolationshülle angeordneten Teil der Gaszuführleitung oder dem Gasanschluss angeordnet. Der Gasanschluss dient dabei zum Anschluss des Gaszuführsystems und damit des Brennstoffzellenmoduls an eine externe Versorgung mit Verbrennungsgas, also beispielsweise an ein öffentliches Erdgasnetz.

In Ausgestaltung der Erfindung sind der zweite Stromsammler und das Gaszuführsystem einstückig ausgeführt. Der Stromsammler, das Gaszuführsystem und der Stromanschluss bilden damit nur ein einziges Bauteil. Damit weist das Brennstoffzellenmodul nur eine geringe Anzahl an Einzelteilen auf, was eine Montage des Brennstoffzellenmoduls einfach und damit kostengünstig macht. Wenn die elektrische Verbindung zwischen Stromanschluss und zweitem Stromsammler hergestellt wird, führt die einstückige Ausführung auch zu einer besonders sicheren elektrischen Verbindung, da eine ungewollte Unterbrechung der elektrisch leitenden Verbindung quasi nicht möglich ist. Damit wird ein besonders zuverlässiger Betrieb des Brennstoffzellenmoduls ermöglicht. Die einstückige Ausführung des Gaszuführsystems kann beispielsweise durch Verschweissen oder Verlöten der einzelnen Bauteile wie Stromsammler, Gaszuführleitung und Gasanschluss erreicht werden. Die genannten Bauteile können ebenfalls aus einzelnen Teilen bestehen, die beispielsweise verschweisst oder verlötet werden.

In Ausgestaltung der Erfindung ist innerhalb des Gaszuführsystems ein Reformer angeordnet. Der Reformer dient dazu, das im Verbrennungsgas enthaltene Methan in die reduzierenden Komponenten Wasserstoff und Kohlenmonoxid umzuwandeln. Damit wird ermöglicht, dass der Reformer platzsparend untergebracht werden kann und ausserdem kann er im Zuge einer Vormontage in das Gaszuführsystem eingesetzt werden, was eine einfache und kostengünstige Montage des Brennstoffzellenmoduls ermöglicht. Der Reformer ist insbesondere in der Gaszuführleitung angeordnet, die dazu über eine spezielle Hülse verfügen kann. Der Reformer wird dabei nicht als Teil des Gaszuführsystems angesehen.

In Ausgestaltung der Erfindung weist der zweite Stromsammler und insbesondere auch der erste Stromsammler die gleiche Aussenkontur wie die Brennstoffzellen auf. Damit werden ein effektiver Betrieb und gleichzeitig ein kompakter Aufbau des Brennstoffzellenmoduls ermöglicht. Die Brennstoffzellen und damit auch die Stromsammler weisen insbesondere einen kreisrunden Querschnitt quer zur Axialrichtung auf. Sie können aber auch einen anderen Querschnitt, wie beispielsweise ellipsenförmig, rechteckig oder quadratisch aufweisen. Unter der Aussenkontur soll hier die Kontur in einer Ebene senkrecht zur Axialrichtung verstanden werden.

In Ausgestaltung der Erfindung weist das Brennstoffzellenmodul ein Spannelement auf, mittels welchem der erste und zweite Stromsammler und damit der Zellenstapel zumindest mittelbar verspannt werden können. Das Spannelement ist mit dem ersten Stromsammler elektrisch leitend verbunden, so dass die notwendige elektrische Kontaktierung des ersten Stromsammlers über das Spannelement erfolgen kann. Damit kann ein besonders einfacher und kostengünstiger Aufbau des Brennstoffzellenmoduls ermöglicht werden.

Eine Verspannung des Zellstapels ist beispielsweise in der EP 1 864 347 B1 beschrieben.

Das Spannelement kann mit dem ersten Stromsammler direkt oder indirekt über einen Deckel oder ein so genanntes Spannjoch verbunden sein.

Die beschriebene Kontaktierung des ersten Stromsammlers ist dabei auch unabhängig von der Anordnung eines Stromanschlusses am Gaszuführsystem gemäss Anspruch 1 umsetzbar.

In Ausgestaltung der Erfindung ist das Gaszuführsystem zumindest teilweise in einem Brennstoffzellenboden angeordnet, der aus einem Isolationsmaterial ausgeführt ist. Damit wird auch eine Isolation des Zellenstapels im Bereich des Gaszuführsystems erreicht. Das Gaszuführsystem ist insbesondere so ausgeführt, dass die Gaszuführleitung auf der den Brennstoffzellen abgewandten Seite in Axialrichtung zum zweiten Stromsammler führt. Damit ist der Brennstoffzellenboden ebenfalls an auf der den Brennstoffzellen abgewandten Seite des zweiten Stromsammlers angeordnet und sorgt für eine Isolierung des Zellenstapels in Axialrichtung. Ausserdem ist der Brennstoffzellenboden im Betriebszustand des Brennstoffzellenmoduls meist unterhalb des Zellenstapels angeordnet und dient damit zu dessen sicherer Abstützung und quasi als Boden des gesamten Brennstoffzellenmoduls.

In Ausgestaltung der Erfindung weist der Brennstoffzellenboden die gleiche Aussenkontur wie die Brennstoffzellen auf. Damit ist ein besonders kompakter Aufbau des Brennstoffzellenmoduls möglich.

In Ausgestaltung der Erfindung ist der Brennstoffzellenboden aus zwei verschiedenen Isolationsmaterialen ausgeführt. Insbesondere weist der Brennstoffzellenboden einen inneren Teil aus einem ersten Isolationsmaterial und einen äusseren Teil aus einem zweiten Isolationsmaterial auf. Es ist dabei nicht erforderlich, dass der Brennstoffzellenboden über seine gesamte Ausdehnung in Axialrichtung aus zwei verschiedenen Isolationsmaterialien ausgeführt ist. Der Brennstoffzellenboden kann auch aus mehr als zwei verschiedenen Isolationsmaterialen bestehen.

Das erste Isolationsmaterial verfügt insbesondere über eine höhere Festigkeit und/oder eine geringere Wärmeisolationswirkung als das zweite Isolationsmaterial. Damit können die Isolationswirkung und die Stützwirkung des Brennstoffzellenbodens besonders gut an die gegebenen Erfordernisse angepasst werden. Es ist so möglich, den Brennstoffzellenboden innen hoch mechanisch belastbar und aussen besonders gut wärmeisolierend auszuführen. Das erste Isolationsmaterial kann beispielsweise als ein keramisches Isolationsmaterial auf Calcium- und/oder Magnesium- und/oder Aluminiumsilicatbasis bestehen und zusätzlich Eisen- und/oder Titan- und/oder Kalium- und/oder Natriumoxid enthalten. Das zweite Isolationsmaterial kann beispielsweise als ein anorganisches Material auf Basis von Kieselsäure mit Infrarot-Trübungsmitteln ausgeführt sein. Derartige Isolationsmaterialien sind im Handel problemlos erhältlich.

In Ausgestaltung der Erfindung weist der Brennstoffzellenboden zumindest einen Abgasdurchlass auf, der insbesondere zumindest teilweise im inneren Teil des Brennstoffzellenbodens angeordnet ist. Bei der elektrochemischen Reaktion in den Brennstoffzellen und der so genannten Nachverbrennung entsteht heisses Abgas, das abgeleitet und insbesondere zu einem Kamin geführt werden muss. Die Anordnung eines Abgasdurchlasses im Brennstoffzellenboden ermöglicht einen besonders kompakten Aufbau des Brennstoffzellenmoduls. Ausserdem wird damit auch eine Isolation des Abgases gegenüber den anderen Bauteilen des Brennstoffzellenmoduls erreicht. Der Brennstoffzellenboden weist insbesondere mehrere und im speziellen vier Abgasdurchlässe auf.

In Ausgestaltung der Erfindung weist das Brennstoffzellenmodul einen Wärmetauscher auf, welcher unmittelbar benachbart zum Brennstoffzellenboden und insbesondere unterhalb des Brennstoffzellenbodens angeordnet ist. In diesem Wärmetauscher wird dem Abgas die Wärmeenergie entzogen und beispielsweise dem Wasser eines Heizkreises zugeführt. Der Wärmetauscher wirkt damit als Wärmesenke für das Brennstoffzellenmodul. Das Gaszuführsystem und damit auch der am Gaszuführsystem angeordnete Stromanschluss sind damit zumindest mittelbar mit dem Wärmetauscher wärmeableitend verbunden. Damit wird ermöglicht, dass der Stromanschluss auch im Betrieb des Brennstoffzellenmoduls keine zu hohe Temperatur, beispielsweise immer maximal 100 °C aufweist und so keine speziellen, für sehr hohe Temperaturen geeignete elektrischen Anschlusselemente, beispielsweise Steckverbindungen verwendet werden müssen. Dies ermöglicht einen kostengünstigen Aufbau des Stromanschlusses und damit des Brennstoffzellenmoduls.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: ein Brennstoffzellenmodul in einem Längsschnitt,
- Fig. 2: das Brennstoffzellenmodul in einem Querschnitt und
- Fig. 3: einen Gasanschluss des Brennstoffzellenmoduls

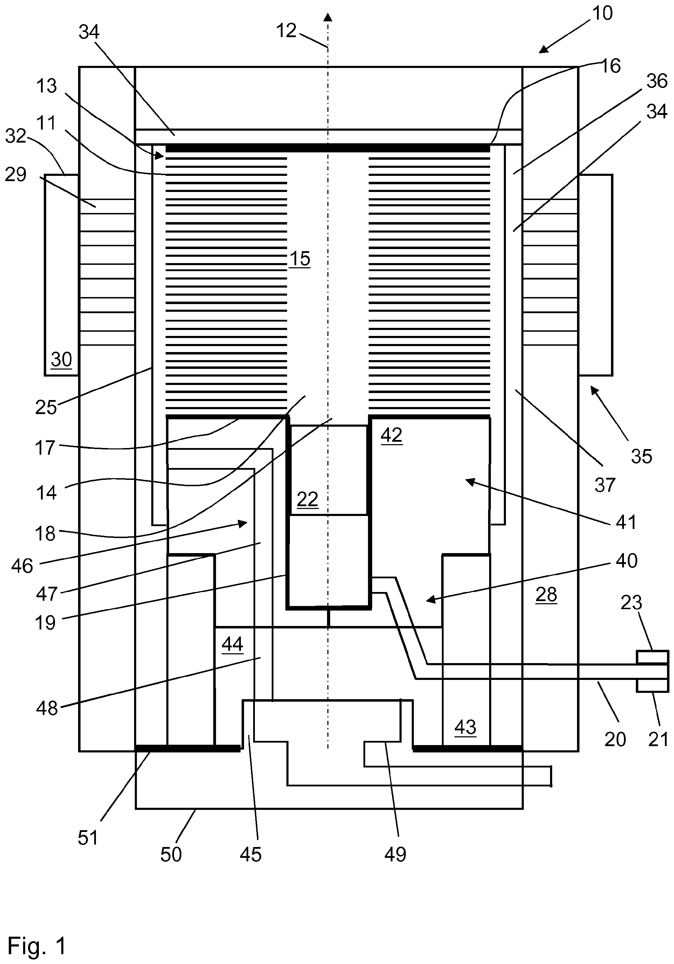

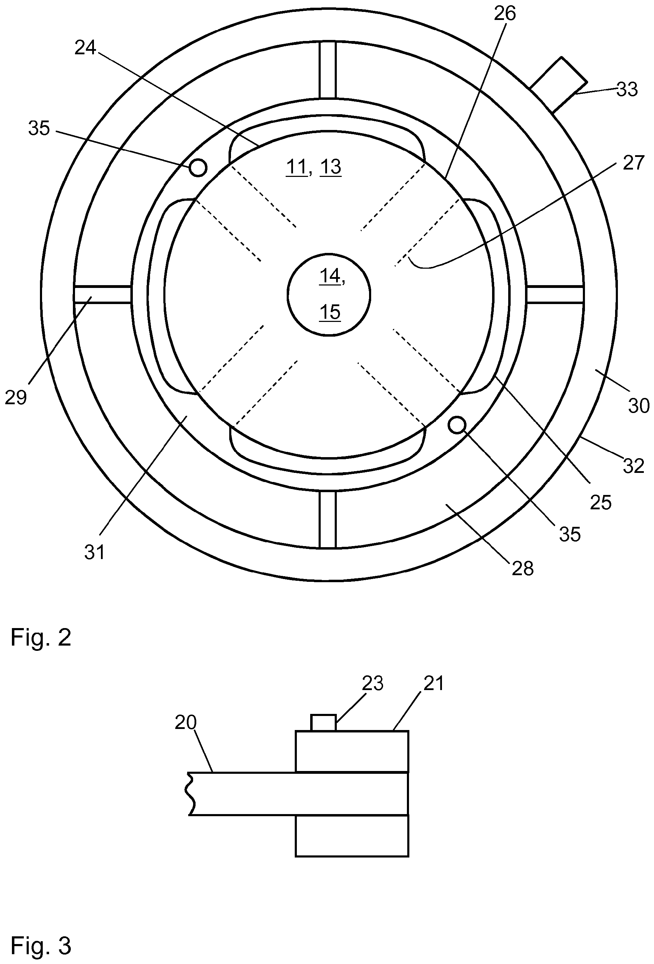

Gemäss Fig. 1 weist ein Brennstoffzellenmodul 10 mehrere Brennstoffzellen 11 auf, die in einer Axialrichtung 12 aufeinander gestapelt sind und so einen Zellenstapel 13 bilden. Die einzelnen Brennstoffzellen 11 weisen eine scheibenförmige Grundform mit einem kreisrunden Querschnitt (siehe Fig. 2) und damit quer bzw. senkrecht zur Axialrichtung 12 eine runde Aussenkontur auf, so dass der Zellenstapel 13 eine zylinderförmige Grundform aufweist. Die Brennstoffzellen können aber auch einen anderen Querschnitt, wie beispielsweise ellipsenförmig, rechteckig oder quadratisch aufweisen.

Die Brennstoffzellen 11 weisen mittig eine Innenöffnung 14 in Axialrichtung 12 auf (siehe Fig. 2), so dass sich im Zellenstapel 13 ein zylinderförmiger Verteilkanal 15 ausbildet, von dem aus jeder Brennstoffzelle 11 Erdgas für die in den Brennstoffzellen 11 stattfindende elektrochemische Reaktion zugeführt werden kann.

Der Zellenstapel 13 wird nach oben von einem oberen, ersten Stromsammler 16 abgeschlossen. Der obere Stromsammler 16 hat eine mit den Brennstoffzellen 11 identische Grundform, weist aber keine Innenöffnung auf. Er hat damit die gleiche Aussenkontur wie die Brennstoffzellen 11. Der obere Stromsammler 16 bildet die Anode der vom Zellenstapel 13 erzeugten Spannung. Der obere Stromsammler 16 liegt an einem zylinderförmigen Deckel 34 an und ist mit diesem elektrisch leitend verbunden. Der Deckel 34 wird mittels zweier hauptsächlich zylinderförmigen Spannelemente 35, die nur in Fig. 2 dargestellt sind, mit einer Bodenplatte 51 verspannt. Die Spannelemente 35 verlaufen dazu entlang dem Zellenstapel 13. Zumindest eines der beiden Spannelemente 35 ist elektrisch leitend mit dem Deckel 34 verbunden, so dass die notwendige elektrische Kontaktierung des oberen Stromsammlers 16 über zumindest eines der beiden Spannelemente erfolgt.

Statt mittels eines zylinderförmigen Deckels kann die Verspannung und damit die beschriebene Kontaktierung mittels eines hauptsächlich quaderförmigen Jochs erfolgen.

Die elektrische Kontaktierung des oberen Stromsammlers kann aber auch auf eine andere Weise erfolgen.

Der Zellenstapel 13 wird nach unten von einem unteren, zweiten Stromsammler 17 abgeschlossen, der die Kathode der vom Zellenstapel 13 erzeugten Spannung bildet. Die Spannelemente 35 verspannen damit mittelbar auch den oberen und unteren Stromsammler 16, 17. Der untere Stromsammler 17 hat ebenfalls eine mit den Brennstoffzellen 11 identische Grundform und weist eine kreisrunde Innenöffnung 18 auf. Er hat damit die gleiche Aussenkontur wie die Brennstoffzellen 11. Der untere Stromsammler 17 ist mit einer hohlzylinderförmigen Hülse 19 verschweisst, welche Teil einer Gaszuführleitung 20 ist, an der ein Gasanschluss 21 angeordnet ist. Über den Gasanschluss 21, die Gaszuführleitung 20, die Hülse 19 und die Innenöffnung 18 des unteren Stromsammlers 17 kann damit Prozessgas dem Verteilkanal 15 des Zellenstapels 13 zugeführt werden. Der Gasanschluss 21 und die Gaszuführleitung 20 mit der Hülse 19 bilden damit ein Gaszuführsystem 40 zur Zuführung von Verbrennungsgas zum Zellenstapel 13. In der Hülse 19 ist ein Reformer 22 angeordnet, in dem das im zugeführten Erdgas enthaltene Methan vor der Zuführung in den Verteilkanal 15 in Wasserstoff und Kohlenmonoxid und damit in Prozessgas umgewandelt wird. Der zweite Stromsammler 17, die Hülse 19, die Gaszuführleitung 20 und der Gasanschluss 21 sind aus einem elektrisch leitenden Material in Form von Stahl ausgeführt, so dass der Gasanschluss 21 mit dem Stromsammler 17 elektrisch leitend verbunden ist. Damit ist das gesamte Gaszuführsystem 40 aus elektrisch leitendem Material ausgeführt. Die Einzelteile des Gaszuführsystems 40 und der untere Stromsammler 17 sind untereinander verschweisst, so dass das Gaszuführsystem 40 und der untere Stromsammler 17 einstückig ausgeführt sind.

Am Gasanschluss 21 ist gemäss Fig. 3 ein schematisch dargestellter Stromanschluss 23 angeordnet, über welchen über den Gasanschluss 21 und die Gaszuführleitung 20 eine elektrische Verbindung zum unteren Stromsammler 17 hergestellt werden kann. Der Stromanschluss kann beispielsweise als eine elektrische Steckverbindung ausgeführt sein. Es ist aber ebenfalls möglich, dass er eine Klemme aufweist, in die ein Kabel mittels einer Schraube festgeklemmt werden kann.

Die für die in den Brennstoffzellen 11 stattfindende elektrochemische Reaktion notwenige Luft wird dem Zellenstapel 13 von aussen zugeführt. Dies wird anhand von Fig. 2 erläutert. Gleichmässig an einer runden Aussenkontur 24 des Zellenstapels 13 und damit der Brennstoffzellen 11 verteilt sind vier identische Abgaskanäle 25 angeordnet. Zwischen den Abgaskanälen 25 ergeben sich Lücken 26, über die den Brennstoffzellen 11 Luft zugeführt werden kann. Die Brennstoffzellen 11 verfügen über Luftleitelemente 27, die von den Lücken 26 in Richtung Verteilkanal 15 verlaufen. Damit kann Luft ausgehend von den Lücken 26 über die Luftleitelemente 27 in Richtung Verteilkanal 15 strömen und von dort wieder nach aussen, wobei die elektrochemische Reaktion mit dem Wasserstoff und dem Kohlenmonoxid stattfinden kann. Die Abgase der elektrochemischen Reaktion, sowie noch nicht reagierte Bestandteile gelangen in die Abgaskanäle 25, in denen auch eine so genannte Nachverbrennung, also eine Oxidation des nicht reagierten Wasserstoffs und des Kohlenmonoxids stattfindet. Über die Abgaskanäle 25 wird das Abgas in Richtung unterem Stromsammler 17 abgeleitet.

Um den Zellenstapel 13 herum ist eine hohlzylinderförmige Isolationshülle 28 angeordnet, so dass der Zellenstapel 13 innerhalb der Isolationshülle 28 angeordnet ist. Die Isolationshülle 28 ist aus einem keramischen Material ausgeführt und weist von aussen nach innen führende Durchgangsöffnungen 29 auf, wobei in der Schnittebene der Fig. 2 vier Durchgangsöffnungen 29 angeordnet sind. Über die Durchgangsöffnungen 29 kann Luft aus einem aussen ausgebildeten Versorgungsraum 30 in einen zwischen Zellenstapel 13 und Isolationshülle 28 ausgebildeten Luftverteilraum 31 zugeführt werden. Die Durchgangsöffnungen 29 sind dabei so angeordnet, dass sie die Luft direkt auf die Abgaskanäle 25 leiten. Die Luft strömt dann hauptsächlich in Umfangsrichtung an den Abgaskanälen 25 entlang zu den oben beschriebenen Lücken 26, um dann wie beschrieben in Richtung Verteilkanal 15 zu strömen. Die zugeführte Luft kühlt damit die Abgaskanäle 25, welche dann über Konvektion den Zellenstapel 13 kühlen. Die Luft strömt auch teilweise in Axialrichtung, um so auch zu den Brennstoffzellen 11 zu gelangen, an deren Axialposition nicht direkt eine Durchgangsöffnung angeordnet ist. Da ein Druckverlust beim Strömen in die Brennstoffzellen 11 hinein vergleichsweise gross ist, verteilt sich die Luft in axialer Richtung des Verteilraums 31 so, dass alle Brennstoffzellen 11 gleichmässig mit Luft versorgt werden.

Der Versorgungsraum 30 wird von einem Versorgungselement 32 nach aussen begrenzt. Das Versorgungselement 32 ist kreisförmig um die Isolationshülle 28 herum angeordnet. Dem Versorgungsraum 30 wird nur über eine Luftzuführung 33 Luft zugeführt. Dabei handelt es sich um die für den Betrieb und die Kühlung notwendige Luft. Über die Luftzuführung 33 wird so viel Luft zugeführt, dass sich im Versorgungsraum 30 ein quasi konstanter Druck ausbildet.

Wie in Fig. 1 dargestellt, ist der Gasanschluss 21 und damit auch der Stromanschluss 23 ausserhalb der Isolationshülle 28 angeordnet. Die Gaszuführleitung 20 führt durch die Isolationshülle 28 hindurch und ist damit teilweise innerhalb und teilweise ausserhalb der Isolationshülle 28 angeordnet.

Unterhalb des unteren Stromsammlers 17 ist ein Brennstoffzellenboden 41 angeordnet, der die selbe Aussenkontur wie der untere Stromsammler 17 und damit auch wie der Zellenstapel 13 und der obere Stromsammler 16 aufweist. Damit ist auch ein Teil des Gaszuführsystems 40, nämlich ein Teil der Zuführleitung 20 mit der Hülse 19 im Brennstoffzellenboden 41 angeordnet. Der Brennstoffzellenboden 41 weist einen oberen Teil 42 auf, der an den unteren Stromsammler 17 angrenzt und auch die selbe Aussenkontur wie der untere Stromsammler 17 aufweist. Der obere Teil 42 des Brennstoffzellenbodens 41 besteht aus mehreren Teilen, die in der Fig. 1 aber nicht genauer dargestellt sind. An den oberen Teil 42 des Brennstoffzellenbodens 41 schliesst sich nach unten im radial äusseren Bereich ein äusserer Teil 43 des Brennstoffzellenbodens 41 an. Der äussere Teil 43 des Brennstoffzellenbodens 41 weist eine hohlzylinderförmige Grundform mit einer im Wesentlichen gleichen Aussenkontur wie der untere Stromsammler 17 auf. Innerhalb des äusseren Teils 43 des Brennstoffzellenbodens 41 und erst weiter unten als dieser beginnend ist ein innerer Teil 44 des Brennstoffzellenbodens 41 angeordnet. Dieser innere Teil 44 weist eine zylinderförmige Grundform auf. An seiner unteren Seite weist der innere Teil 44 eine zylinderförmige Ausnehmung 45 auf.

Der Brennstoffzellenboden 41 besteht aus zwei unterschiedlichen Isolationsmaterialien. Der innere Teil 44 und der obere Teil 42 bestehen aus einem keramischen Isolationsmaterial auf Calciumsilicatbasis, das über eine sehr hohe Festigkeit verfügt. Der äussere Teil 43 besteht aus einem anorganischen Isolationsmaterial auf Kieselsäurebasis, das im Vergleich zum ersten Isolationsmaterial über eine geringere Festigkeit und eine höhere Wärmeisolationswirkung verfügt.

Zur Ableitung des Abgases der Brennstoffzellen 11 sind im Brennstoffzellenboden 41 insgesamt vier Abgasdurchlässe 46 vorgesehen, von denen in der Fig. 1 aus Übersichtlichkeitsgründen nur einer dargestellt ist. Der Abgasdurchlass 46 setzt sich aus einem oberen Abgasdurchlassteil 47 im oberen Teil 42 des Brennstoffzellenbodens 41 und einem unteren Abgasdurchlassteil 48 im inneren Teil 44 des Brennstoffzellenbodens 41 zusammen. Der obere Abgasdurchlassteil 47 verläuft zunächst von aussen radial nach innen und anschliessend direkt nach unten. Er ist aussen mit einem Abgaskanal 25 verbunden, so dass das von den Brennstoffzellen 11 kommende Abgas über den Abgaskanal 25 in den oberen Abgasdurchlassteil 47 strömen kann. Die anderen drei nicht dargestellten Abgasdurchlässe sind ebenfalls jeweils einem Abgaskanal 25 zugeordnet. An den oberen Abgasdurchlassteil 47 schliesst sich fluchtend der untere Abgasdurchlassteil 48 an, der in der Ausnehmung 45 des inneren Teils 44 des Brennstoffzellenbodens 41 endet. In der Ausnehmung 45 ist ein Abgassammler 49 angeordnet, der die Abgase der vier Abgasdurchlässe 46 sammelt und durch einen direkt unterhalb des Brennstoffzellenbodens 41 angeordneten Wärmetauscher 50 hindurchleitet. Der Wärmetauscher 50 ist damit unmittelbar benachbart zum Brennstoffzellenboden 41 angeordnet, wobei zwischen dem Brennstoffzellenboden 41 und dem Wärmetauscher die Bodenplatte 51 angeordnet ist.

Im Wärmetauscher 50 wird dem Abgas Wärme entzogen, bevor es über einen nicht dargestellten Kamin in die Umwelt abgeführt wird. Im Wärmetauscher 50 zirkuliert dazu ein nicht dargestelltes Wärmeträgermedium, das wiederum die Wärme an eine Raumheizung abgeben oder zur Erwärmung von Brauchwasser genutzt werden kann.

## Patentansprüche

1. Brennstoffzellenmodul mit
- in einem Zellenstapel (13) angeordneten Brennstoffzellen (11) und
- einem Gaszuführsystem (40) zur Zuführung von Gas zum Betrieb der Brennstoffzellen (11),
wobei
- die Brennstoffzellen (11) in einer Axialrichtung (12) gestapelt sind und
- an einem ersten axialen Ende des Zellenstapels (13) ein erster Stromsammler (16) und an einem zweiten axialen Ende des Zellenstapels (13) ein zweiter Stromsammler(17) angeordnet ist,
wobei
das Gaszuführsystem (40) eine Gaszuführleitung (20) und eine an der Gaszuführleitung (20) angeordneten Gasanschluss (21) umfasst und am Gaszuführsystem (40) ein Stromanschluss (23) angeordnet ist, der mit dem zweiten Stromsammler (17) elektrisch leitend verbunden ist, und das Gaszuführsystem (40) zumindest teilweise aus einem elektrisch leitenden Material ausgeführt ist und die elektrisch leitende Verbindung über das Gaszuführsystem (40) hergestellt ist, wobei der Zellenstapel (13) innerhalb und die Gaszuführleitung (20) teilweise ausserhalb und teilweise innerhalb einer Isolationshülle (28) angeordnet sind und der Stromanschluss (23) ausserhalb der Isolationshülle (28) angeordnet ist.

2. Brennstoffzellenmodul nach Anspruch 1
**dadurch gekennzeichnet, dass**
der zweite Stromsammler (17) und das Gaszuführsystem (40) einstückig ausgeführt sind.

3. Brennstoffzellenmodul nach einem der Ansprüche 1 oder 2,
**dadurch gekennzeichnet, dass**
innerhalb des Gaszuführsystems (40) ein Reformer (22) angeordnet ist.

4. Brennstoffzellenmodul nach einem der Ansprüche 1 bis 3,
**dadurch gekennzeichnet, dass**
der zweite Stromsammler (17) und insbesondere auch der erste Stromsammler (16) die gleiche Aussenkontur wie die Brennstoffzellen (11) aufweisen.

5. Brennstoffzellenmodul nach einem der Ansprüche 1 bis 4,
**gekennzeichnet durch**
ein Spannelement (35), mittels welchem der erste und zweite Stromsammler (16, 17) zumindest mittelbar verspannt werden, und welches mit dem ersten Stromsammler (16) elektrisch leitend verbunden ist.

6. Brennstoffzellenmodul nach einem der Ansprüche 1 bis 5,
**dadurch gekennzeichnet, dass**
das Gaszuführsystem (40) zumindest teilweise in einem Brennstoffzellenboden (41) angeordnet ist, der aus einem Isolationsmaterial ausgeführt ist.

7. Brennstoffzellenmodul nach Anspruch 6,
**dadurch gekennzeichnet, dass**
der Brennstoffzellenboden (41) die gleiche Aussenkontur wie die Brennstoffzellen (11) aufweist.

8. Brennstoffzellenmodul nach Anspruch 6 oder 7,
**dadurch gekennzeichnet, dass**
der Brennstoffzellenboden (41) aus zwei verschiedenen Isolationsmaterialen ausgeführt ist.

9. Brennstoffzellenmodul nach Anspruch 8,
**dadurch gekennzeichnet, dass**
der Brennstoffzellenboden (41) einen inneren Teil (44) aus einem ersten Isolationsmaterial und einen äusseren Teil (43) aus einem zweiten Isolationsmaterial aufweist und das erste Isolationsmaterial eine höhere Festigkeit und/oder eine geringere Wärmeisolationswirkung als das zweite Isolationsmaterial aufweist.

10. Brennstoffzellenmodul nach einem der Ansprüche 6 bis 9,
**dadurch gekennzeichnet, dass**
der Brennstoffzellenboden (41) zumindest einen Abgasdurchlass (46) aufweist.

11. Brennstoffzellenmodul nach Anspruch 9 und 10,
**dadurch gekennzeichnet, dass**
der Abgasdurchlass (46) zumindest teilweise im inneren Teil (44) des Brennstoffzellenbodens (41) ausgeführt ist.

12. Brennstoffzellenmodul nach einem der Ansprüche 6 bis 11,
**gekennzeichnet durch**
einen Wärmetauscher (50), welcher unmittelbar benachbart zum Brennstoffzellenboden (41) angeordnet ist.

## Claims

1. A fuel cell module comprising
- fuel cells (11) arranged in a cell stack (13) and
- a gas supply system (40) for supplying gas for the operation of the fuel cells (11),
wherein
- the fuel cells (11) are stacked in an axial direction (12) and
- a first accumulator (16) is arranged at a first axial end of the cell stack (13) and a second accumulator (17) is arranged at a second axial end of the cell stack (13),
wherein
the gas supply system (40) comprises a gas supply line (20) and a gas connection (21) arranged at the gas supply line (20) and a power connection (23) which is electrically conductively connected to the second accumulator (17) is arranged at the gas supply system (40), and the gas supply system (40) is formed at least partly from an electrically conductive material and the electrically conductive connection is established via the gas supply system (40), wherein the cell stack (13) is arranged within an insulation sheath (28) and the gas supply line (20) is arranged partly outside and partly inside the insulation sheath (28) and the power connection (23) is arranged outside the insulation sheath (28).

2. A fuel cell module in accordance with claim 1,
**characterized in that**
the second accumulator (17) and the gas supply system (40) are configured in one piece.

3. A fuel cell module in accordance with any one of the claims 1 or 2,
**characterized in that**
a reformer (22) is arranged within the gas supply system (40).

4. A fuel cell module in accordance with any one of the claims 1 to 3,
**characterized in that**
the second accumulator (17) and in particular also the first accumulator (16) have the same outside contour as the fuel cells (11).

5. A fuel cell module in accordance with any one of the claims 1 to 4,
**characterized by**
a tensioning element (35) by means of which the first and second accumulators (16, 17) are at least indirectly tensioned and which is electrically conductively connected to the first accumulator (16).

6. A fuel cell module in accordance with any one of the claims 1 to 5,
**characterized in that**
the gas supply system (40) is arranged at least partly in a fuel cell base (41) which is formed from an insulating material.

7. A fuel cell module in accordance with claim 6,
**characterized in that**
the fuel cell base (41) has the same outside contour as the fuel cells (11).

8. A fuel cell module in accordance with claim 6 or 7,
**characterized in that**
the fuel cell base (41) is formed from two different insulation materials.

9. A fuel cell module in accordance with claim 8,
**characterized in that**
the fuel cell base (41) has an inner part (44) composed of a first insulation material and an outer part (43) composed of a second insulation material and the first insulation material has a higher strength and/or a smaller heat insulation effect than the second insulation material.

10. A fuel cell module in accordance with any one of the claims 6 to 9,
**characterized in that**
the fuel cell base (41) has at least one exhaust gas passage (46).

11. A fuel cell module in accordance with claim 9 and 10,
**characterized in that**
the exhaust gas passage (46) is formed at least partly in the inner part (44) of the fuel cell base (41).

12. A fuel cell module in accordance with any one of the claims 6 to 11,
**characterized by**
a heat exchanger (50) which is arranged directly adjacent to the fuel cell base (41).

## Revendications

1. Un module de pile à combustible avec
- des piles à combustible (11) disposées dans un bloc de piles (13) et
- un système d'alimentation en gaz (40) pour fournir du gaz pour faire fonctionner lesdites piles à combustible (11),
dans lequel
- les piles à combustible (11) sont empilées dans une direction axiale (12) et
- un premier collecteur de courant (16) est disposé à une première extrémité axiale du bloc de piles (13) et un second collecteur de courant (17) est disposé à une seconde extrémité axiale du bloc de piles (13),
dans lequel
le système d'alimentation en gaz (40) comprend une conduite d'alimentation en gaz (20) et une connexion de gaz (21) disposée sur la conduite d'alimentation en gaz (20) et une connexion électrique (23) est disposée sur le système d'alimentation en gaz (40), qui est connectée électriquement de manière conductrice au second collecteur de courant (17), et le système d'alimentation en gaz (40) est conçu au moins partiellement d'un matériau électriquement conductrice et la connexion électriquement conductrice est établie via le système d'alimentation en gaz (40), dans lequel le bloc de piles (13) est disposée à l'intérieur et la conduite d'alimentation en gaz (20) est disposée en partie à l'extérieur et en partie à l'intérieur d'une gaine isolante (28) et la connexion électrique (23) est disposé à l'extérieur de la gaine isolante (28).

2. Un module de pile à combustible selon la revendication 1,
**caractérisé en ce que**
le second collecteur de courant (17) et le système d'alimentation en gaz (40) sont réalisés en une seule pièce.

3. Un module de pile à combustible selon l'une des revendications 1 ou 2, **caractérisé en ce que**
un reformeur (22) est disposé dans le système d'alimentation en gaz (40).

4. Un module de pile à combustible selon l'une des revendications 1 à 3, **caractérisé en ce que**
le second collecteur de courant (17) et en particulier le premier collecteur de courant (16) ont le même contour extérieur que les piles à combustible (11).

5. Un module de pile à combustible selon l'une des revendications 1 à 4, **caractérisé par**
un élément de serrage (35) au moyen duquel les premier et second collecteur de courant (16, 17) sont serrés au moins indirectement, et qui est connecté électriquement de manière conductrice au premier collecteur de courant (16).

6. Un module de pile à combustible selon l'une des revendications 1 à 5, **caractérisé en ce que**
le système d'alimentation en gaz (40) est disposé au moins partiellement dans une base de pile à combustible (41) qui est conçue en un matériau isolant.

7. Un module de pile à combustible selon la revendication 6,
**caractérisé en ce que**
la base de pile à combustible (41) a le même contour extérieur que les piles à combustible (11).

8. Un module de pile à combustible selon la revendication 6 ou 7,
**caractérisé en ce que**
la base de pile à combustible (41) est conçue en deux matériaux d'isolation différents.

9. Un module de pile à combustible selon la revendication 8,
**caractérisé en ce que**
la base de pile à combustible (41) présente une partie intérieure (44) réalisée en un premier matériau isolant et une partie extérieure (43) réalisée en un second matériau isolant et le premier matériau isolant a une résistance plus élevée et/ou un effet d'isolation thermique plus faible que le second matériau isolant.

10. Un module de pile à combustible selon l'une des revendications 6 à 9, **caractérisé en ce que**
la base de pile à combustible (41) présente au moins un passage de gaz d'échappement (46).

11. Un module de pile à combustible selon la revendication 9 et 10,
**caractérisé en ce que**
le passage de gaz d'échappement (46) est au moins partiellement conçu dans la partie intérieure (44) de la base de pile à combustible (41).

12. Un module de pile à combustible selon l'une des revendications 6 à 11,
**caractérisé en ce que**
un échangeur de chaleur (50) qui est disposé immédiatement adjacent à la base de pile à combustible (41).
